Europäisches Patentamt

European Patent Office

Office européen des brevets

(11) Numéro de publication: **0 401 120**
**A1**

## DEMANDE DE BREVET EUROPEEN

(21) Numéro de dépôt: **90401468.5**

(22) Date de dépôt: **31.05.90**

(51) Int. Cl.5: **E04G 23/00, B62D 57/024, A47L 11/38**

(30) Priorité: **02.06.89 FR 8907300**

(43) Date de publication de la demande:
**05.12.90 Bulletin 90/49**

(84) Etats contractants désignés:
**AT BE CH DE DK ES FR GB GR IT LI LU NL SE**

(71) Demandeur: **BOUYGUES**
**1 Avenue Eugène Freyssinet**
**F-78061 Saint-Quentin en Yvelines**
**Cedex(FR)**

(72) Inventeur: **Furio, Roland**
**26 Route de Mantes**
**F-78550 Richebourg(FR)**

(74) Mandataire: **Martin, Jean-Jacques et al**
**Cabinet REGIMBEAU 26, Avenue Kléber**
**F-75116 Paris(FR)**

(54) **Robot mobile commandable à distance pour intervenir sur une surface, notamment pour le nettoyage d'une façade verrière.**

(57) L'invention concerne un robot mobile commandable à distance pour intervenir sur une surface.

Ce robot comporte une structure (S) munie des moyens d'intervention et portée par des organes déplaçables (P-P'3) les uns par rapport aux autres et munis de ventouses (A) pour faire adhérer ces organes à ladite surface, des moyens étant prévus pour commander à distance un déplacement sélectif des organes (P-P'3) et une activation ou désactivation sélective des ventouses (A), caractérisé par le fait que lesdits organes sont des pattes pliables (P1-P'3) réparties sur la structure (S) et articulées à la structure (S) et par le fait que des vérins commandables (V) à distance sont montés les uns sur les pattes pour faire varier le pliage des pattes et les autres sur la structure pour faire varier la rotation des pattes par rapport à la structure.

L'invention s'applique notamment au nettoyage d'une façade verrière.

FIG.1

EP 0 401 120 A1

## ROBOT MOBILE COMMANDABLE A DISTANCE POUR INTERVENIR SUR UNE SURFACE, NOTAMMENT POUR LE NETTOYAGE D'UNE FACADE VERRIERE.

L'invention concerne un robot mobile commandable à distance pour porter et déplacer des moyens d'intervention sur une surface.

Elle s'applique notamment au nettoyage de la façade verrière d'un immeuble.

On connaît un robot de nettoyage qui comprend une structure munie des moyens d'intervention et portée par des organes déplaçables les uns par rapport aux autres et munis de ventouses pour faire adhérer ces organes à ladite surface, des moyens étant prévus pour commander à distance un déplacement sélectif des organes et une activation ou désactivation sélective des ventouses, comme décrit dans la publication FR 2 599 772.

Dans ce dispositif connu, les organes munis de ventouses sont deux équerres déplaçables l'une par rapport à l'autre selon un mouvement de translation dans des plans sensiblement parallèles, en sorte que les possibilités de déplacement et de franchissement d'obstacle sont très limitées.

La présente invention vise à fournir un robot convenant particulièrement pour franchir des obstacles et pour se déplacer en tous sens.

Selon l'invention, ce robot est caractérisé par le fait que les ventouses sont portées par des pattes pliables réparties sur la structure et articulées à la structure et par le fait que des vérins commandables à distance sont montés les uns sur les pattes pour faire varier le pliage des pattes et les autres sur la structure pour faire varier la rotation des pattes par rapport à la structure.

Dans une réalisation typique, les pattes sont montées sur le robot en des points répartis sur deux lignes en vis-à-vis et sont associées par paires, une patte montée en un point situé sur l'une des lignes fonctionnant avec une patte montée en un point situé sur l'autre ligne.

Dans le cas d'un déplacement continu, le robot étant en phase de nettoyage sur une surface courante de façade, le robot se déplace de façon continue dans une direction donnée (généralement verticale) : les pattes étant fixées à la façade par le biais des ventouses, l'opérateur ou l'automate agit sur les vérins de façon coordonnée afin d'obtenir ce déplacement continu.

Lorsqu'une patte arrive à la limite de ses possibilités, sa ventouse est désactivée, la patte se soulève, et elle se déplie (ou se replie) de façon à repositionner la ventouse plus loin (ou plus près) dans le sens du déplacement du robot.

Le programme ou l'opérateur, renseigné par les capteurs de position du robot, fait en sorte que la ventouse soit appliquée sur une zone de vitrage sans accident (profil ou joint creux).

La remise en dépression de la ventouse est contrôlée par l'automate ou l'opérateur.

Selon le nombre total de pattes utilisées, une seule ou deux pattes au maximum sont déplacées simultanément.

Le franchissement d'obstacles se fait en écartant la structure de la façade par action sur les vérins de contrôle des pattes et sur les ventouses.

De préférence, on choisit les dimensions des pattes, la répartition des pattes, la forme du capot, et les articulations en fonction de la façade particulière à nettoyer.

Dans le cas d'une commande programmée, les programmes sont établis de façon spécifique pour une façade ou un élément de façade donné.

Les sous-programmes permettent de programmer le nettoyage de surfaces élémentaires de façade, de façon à être enchaînés les uns aux autres et ainsi constituer un programme.

Un sous-programme peut faire appel à d'autres sous-programmes.

La mise en mémoire d'un sous-programme élémentaire se fait en faisant fonctionner le robot manuellement et en mémorisant les ordres reçus.

On décrira ci-après un exemple de réalisation, dans le cas supposé d'un robot de nettoyage, en référence aux figures du dessin joint, la description et les figures étant destinées à faire apparaître d'autres particularités de l'invention.

Sur les figures :

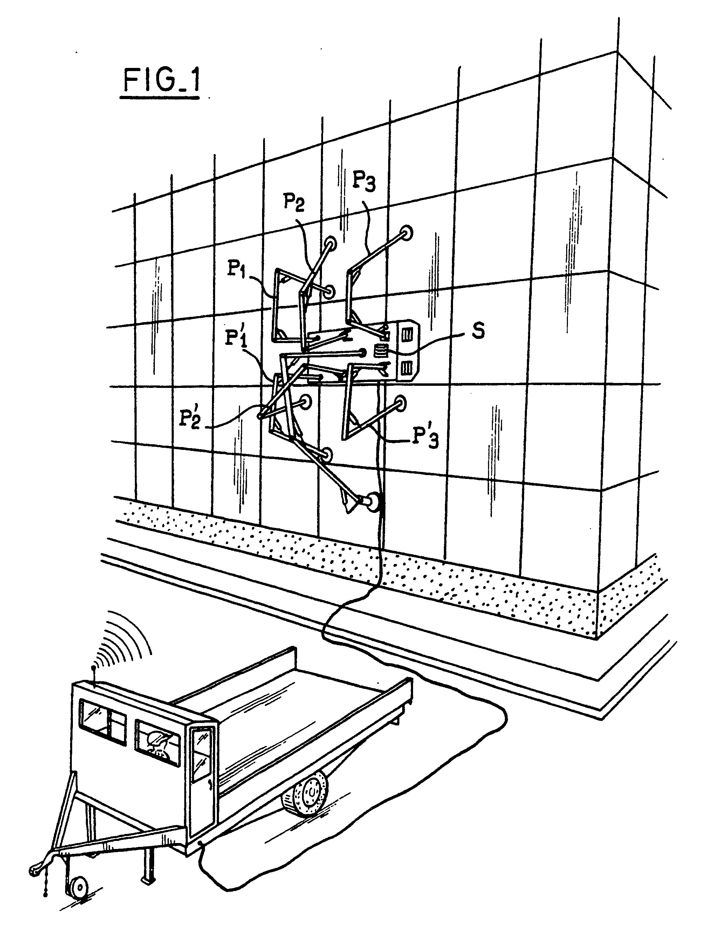

- la figure 1 est une perspective du robot ;
- la figure 2 est une vue latérale du robot ;
- la figure 3 est une vue du robot suivant la flèche F de la figure 2 ;
- la figure 4 est une coupe du robot par un plan vertical perpendiculaire à la façade ;
- la figure 5 est une vue de la partie centrale du robot suivant la flèche $F'$ de la figure 4 ;
- la figure 6 est un schéma de vues successives du robot pendant un déplacement, et
- la figure 7 est un schéma de vues successives du robot pendant un franchissement d'obstacle.

Le robot représenté est constitué par une structure centrale S portée par six pattes pliables $P_1$-$P_3$, $P'_1$-$P'_3$ articulées à la structure en des points répartis sur deux lignes parallèles situées le long de deux bords opposés de la structure.

Chaque patte P est constituée de plusieurs tronçons (généralement trois tronçons) articulés bout à bout et qui portent des vérins V commandant le pliage de la patte.

Un autre vérin $V'$ sur la structure commande la rotation de la patte sur la structure.

A l'extrémité de la patte est montée une ventouse A dont le fonctionnement est commandable à distance, de même que les vérins V et V'.

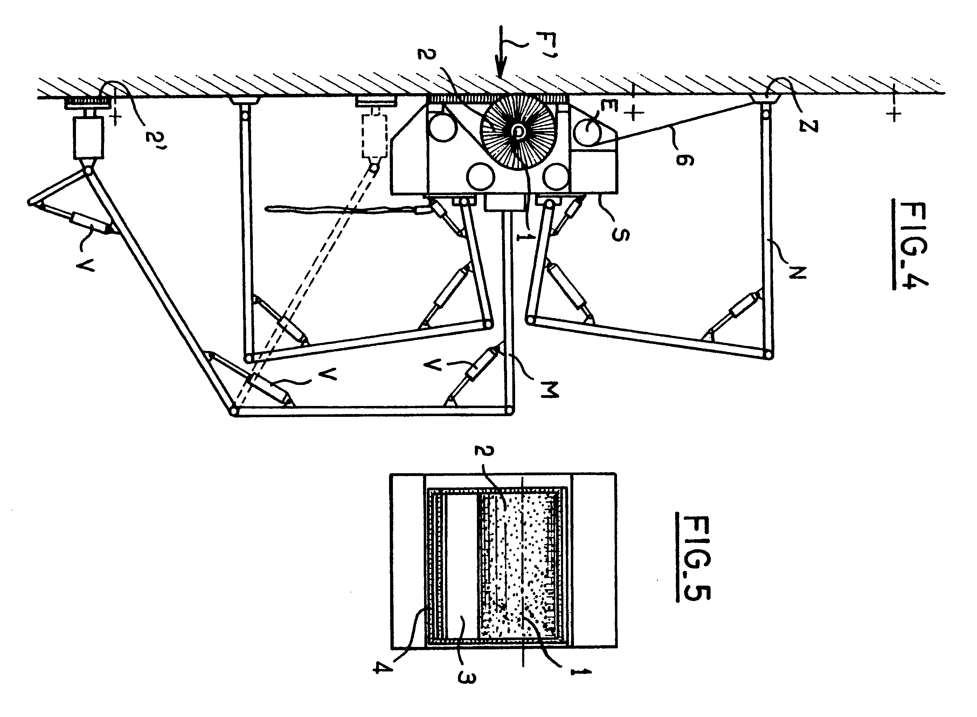

La structure S porte une brosse tangentielle 2 disposée pour tourner autour d'un axe 1 parallèle à la façade à nettoyer, dans un carter, la brosse faisant saillie par une ouverture 3 du carter. L'ouverture est étanche latéralement grâce à des balais 4 ou moyens équivalents (figures 4 et 5).

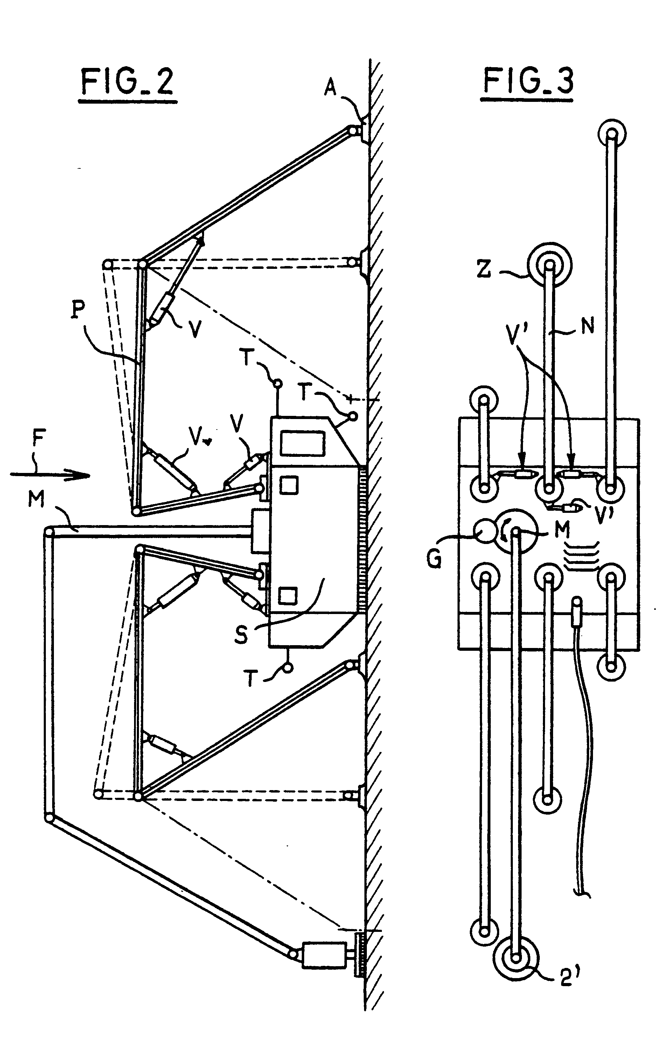

La structure porte également sur un mât tournant central M, un bras articulé qui est muni à son extrémité d'une brosse 2' apte a tourner autour d'un axe perpendiculaire à la façade. Des vérins V commandent le pliage de ce bras et un pignon motorisé G commande la rotation du mat (figures 3 et 4).

La structure est munie de moyens (non représentés) pour envoyer un liquide de nettoyage sur la zone d'action de la brosse principale 1 et récupérer ce liquide après usage en l'aspirant à proximité de la brosse.

Des contacts et capteurs, fixés sur la structure, permettent de détecter ou de mesurer :

    a) les changements de configuration et d'état de surface de l'environnement immédiat du robot lors de son déplacement sur la façade,

    b) les directions.et distances parcourues par le robot,

    c) la pression des rouleaux de nettoyage et appui du capot sur la façade,

    d) l'état des differents organes, énergie, pression pneumatique, dépression des ventouses, niveau des réservoirs, etc...

On a seulement représenté schématiquement sur la figure des capteurs T qui détectent les paramètres a) et b).

Le robot comporte un enrouleur E pour un câble de sécurité 6 fixé à une ventouse Z suffisante pour porter le robot. Cette ventouse est montée de façon détachable sur un bras N du robot. L'enrouleur maintient en permanence le câble légèrement tendu. En cas d'incident majeur compromettant l'adhérence et/ou le déplacement du robot sur la façade, l'enrouleur dévide le câble de façon à permettre une descente lente du robot vers le sol. En variante, le câble est fixé à un rail établi en partie supérieure de la façade ou à un boggie mobile en partie supérieure de la façade et dont la position est asservie à celle du robot.

Le robot est alimenté en énergie électrique depuis la terrasse ou le sol par un câble électrique.

Au cas où l'exploitant du robot voudrait accroître l'autonomie de l'appareil, il est possible d'incorporer un groupe électrogène dans le corps du robot.

Le robot utilise l'énergie pneumatique ou hydraulique pour le fonctionnement des ventouses et des vérins.

Les organes nécessaires, pompes à vide, compresseur, réservoir, etc... sont fixés à la structure du robot.

Des circuits indépendants de distribution assurent la sécurité de l'adhérence du robot à la façade.

La commande du fonctionnement des ventouses et des vérins est réalisée à distance au moyen de liaisons de commande appropriées, par câble ou par radio, depuis un opérateur qui agit directement ou qui pilote une centrale de commande à programmes. La centrale est éventuellement, en tout ou en partie, incorporée au robot.

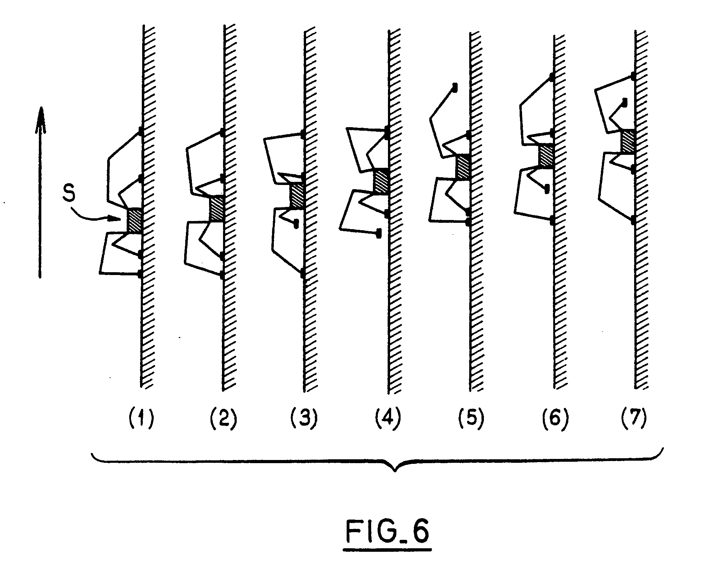

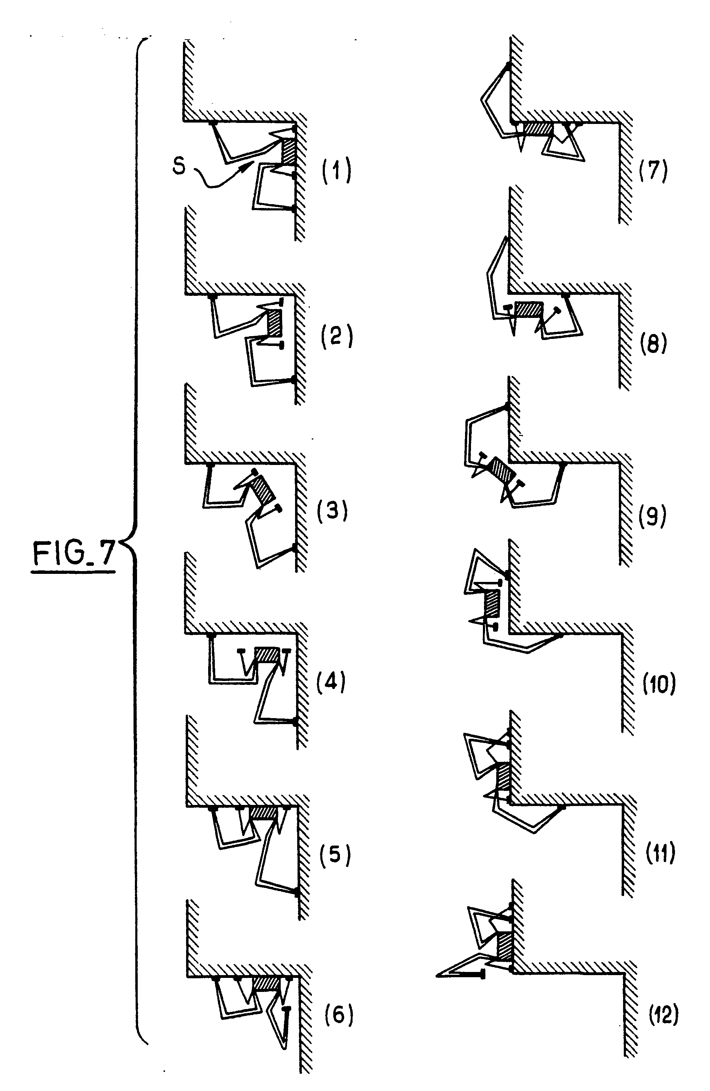

En commandant de façon appropriée les vérins et les ventouses, on provoque tout déplacement voulu du robot pour un nettoyage continu (figure 6) ou pour le franchissement d'un obstacle (figure 7).

## Fonctionnement.-

Le robot marche "en crabe" verticalement. Pour changer de bande de travail, il peut exécuter un déplacement latéral.

Les trois pattes de chaque côté sont associées, par paire sur un même axe, avec les pattes du côté opposé : la patte située en haut à gauche fonctionne avec la patte du bas à gauche, etc. La longueur d'un pas est d'environ 1,5 m., ce qui correspond à la position minimale des pattes le long du corps du robot. Chaque paire de pattes se trouve donc décalée de 1/2 pas, soit 75 cm., par rapport aux autres. Quand une paire arrive "en fin de course", on désactive ses ventouses.

Le robot continue alors son mouvement sur quatre pattes, pendant que cette paire avance d'un pas et se fixe à nouveau sur la façade. Des capteurs vérifient que les paramètres de guidage programmés sont bien respectés, et déclenchent les actions de correction éventuelles ou émettent des messages d'alarme à l'attention de l'opérateur. Si un obstacle imprévu est détecté, ou si une ventouse ne peut confirmer sa bonne fixation, le cycle de déplacement est arrêté, et il se met en attente d'instructions particulières de l'opérateur.

Chaque organe est rigoureusement asservi en positionnement, et un calculateur coordonne l'ensemble des mouvements et recalcule les positions. La vitesse de déplacement est par exemple d'environ 1,20 m/minutes en phase de travail.

La brosse 2 à longs poils (effet de fouet) tourne relativement lentement.

Le liquide de nettoyage (genre lave-glace automobile) est distribué près de la brosse et entraîné par elle sur la paroi.

Le liquide usé est recyclé après filtration. Le réservoir est prévu pour assurer une autonomie d'une demie journée au moins. Il est détachable pour faciliter les opérations de maintenance (remise à niveau du liquide, démontage du filtre pour nettoyage ou échange, etc.)

Le bras manipulateur qui porte la brosse "axiale" motorisée parfait le travail du robot : zones inaccessibles, détails particuliers, traces de ventouses après nettoyage, etc.

Les figures 6 et 7 sont des schémas expliquant un processus de déplacement normal pour un nettoyage (figure 6) et un processus de franchissement d'obstacle (figure 7).

On notera que, selon une caractéristique préférentielle de l'invention, les pattes, non seulement assurent le déplacement du robot mais aussi exercent une pression d'application de la brosse 2 contre la façade sous l'effet de couples symétriques que l'on peut créer grâce aux vérins et aux ventouses.

Bien entendu, l'invention prévoit d'utiliser toute nature désirée d'outil d'intervention, selon le travail à accomplir, qu'il s'agisse d'un travail de nettoyage ou d'un autre travail.

## Revendications

1. Robot mobile commandable à distance pour porter et déplacer des moyens d'intervention sur une surface, notamment une façade de bâtiment, ce robot comportant une structure munie des moyens d'intervention et portée par des organes déplaçables les uns par rapport aux autres et munis de ventouses pour faire adhérer ces organes à ladite surface, des moyens étant prévus pour commander à distance un déplacement sélectif des organes et une activation ou désactivation sélective des ventouses, caractérisé par le fait que lesdits organes sont des pattes pliables réparties sur la structure et articulées à la structure et par le fait que des vérins commandables à distance sont montés les uns sur les pattes pour (faire varier le pliage des pattes et les autres sur la structure pour faire varier la rotation des pattes par rapport à la structure.

2. Robot selon la revendication 1, caractérisé en ce que les moyens d'intervention sur la surface comprennent une brosse tangentielle disposée de façon à tourner autour d'un axe parallèle à la surface.

3. Robot selon la revendication 2, caractérisé en ce que ladite brosse tangentielle est disposée sensiblement au centre de la structure.

4. Robot selon la revendication 2 ou 3, caractérisé en ce que ladite brosse tangentielle est entourée par un carter latéralement étanche, en ce que le robot comporte des moyens pour distribuer un liquide de nettoyage près de ladite brosse tangentielle et des moyens pour aspirer le liquide après brossage.

5. Robot selon l'une des revendications 1 à 4, caractérisé en ce que les moyens d'intervention sur la surface comprennent un moyen d'intervention porté par un bras manipulateur pliable articulé sur un mât tournant commandable à distance.

6. Robot selon la revendication 5, caractérisé en ce que ledit moyen d'intervention est une brosse rotative disposée de façon à tourner autour d'un axe perpendiculaire à la surface.

7. Robot selon l'une des revendications 1 à 6, caractérisé en ce qu'il comporte six pattes munies desdites ventouses.

8. Robot selon la revendication 7, caractérisé en ce que les pattes sont montées sur le robot en des points répartis sur deux lignes en vis-à-vis et sont associées par paires, une patte montée en un point situé sur l'une des lignes fonctionnant avec une patte montée en un point situé sur l'autre ligne.

9. Robot selon l'une des revendications 1 à 8, caractérisé en ce qu'il comprend un câble de sécurité partant d'un enrouleur situé sur la structure et aboutissant à une ventouse apte à porter le robot, ou à un rail fixé à la façade, ou à un boggie mobile sur la façade.

FIG_1

# FIG_2

# FIG_3

FIG_4

FIG_5

FIG.6

FIG. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | FR-A-2 599 772  (HYPER ROBOTICS) <br> * Page 6, lignes 23-35; pages 7-20; figures 1-19 * <br> --- | 1,5 | E 04 G   23/00 <br> B 62 D   57/024 <br> A 47 L   11/38 |
| Y | JP-A-60 092 173 (TOSHIBA) <br> * En entier * <br> --- | 1,5 , / | |
| Y | ROBOTICS AGE, vol. 5, no. 5, septembre/octobre 1983, pages 12-18, Peterborough, New Hampshire, US; M. RUSSELL, Jr.: "ODEX I: The first functionoid" <br> --- | 1,5 | |
| A | GB-A-2 159 696  (ROTOWASH UK, LTD) <br> * Page 1, lignes 86-120; page 2; figures 1-2 * <br> --- | 2,3,4,6 | |
| A | US-A-4 738 583  (MACCONOCHIE) <br> --- | | |
| A | EP-A-0 010 034  (COMMISARIAT A L'ENERGIE ATOMIQUE) <br> --- | | |
| A | BE-A-  347 134  (PUTZEYS) <br> --- | | DOMAINES TECHNIQUES RECHERCHES (Int. Cl.5) <br><br> E 04 G <br> B 62 D <br> A 47 L |
| A | EP-A-0 157 633  (STEWART) <br> --- | | |
| A | EP-A-0 084 012  (KROCZYNSKI) <br> --- | | |
| A | WO-A-8 602 121  (STELLINGSBYGG A/S) <br> --- | | |
| A | US-A-4 437 202  (NAGATSUKA) <br> --- | | |
| A | DE-A-1 628 607  (GROHMANN) <br> ----- | | |

Le présent rapport a été établi pour toutes les revendications

| Lieu de la recherche | Date d'achèvement de la recherche | Examinateur |
|---|---|---|
| LA HAYE | 27-07-1990 | VIJVERMAN W.C. |